# EUROPÄISCHE PATENTSCHRIFT

(11) **EP 3 197 817 B1**
(45) Veröffentlichungstag und Bekanntmachung des Hinweises auf die Patenterteilung: **13.06.2018**
(21) Anmeldenummer: 15760132.9
(22) Anmeldetag: 01.09.2015
(51) Int. Cl.: B66C 23/78

(54) **STÜTZBEIN UND STÜTZKONSTRUKTION FÜR EINE ARBEITSMASCHINE**
SUPPORTING LEG AND SUPPORTING CONSTRUCTION FOR A WORKING MACHINE
BÉQUILLE ET STRUCTURE D'APPUI POUR MACHINE DE TRAVAIL

(30) Priorität: 26.09.2014 DE 102014014038
(43) Veröffentlichungstag der Anmeldung: 02.08.2017
(73) Patentinhaber: Putzmeister Engineering GmbH, 72631 Aichtal (DE)
(72) Erfinder: DAUM, Eva, 70794 Filderstadt (DE); BENZ, Andreas, 73240 Wendlingen (DE); FÜGEL, Dietmar, 72649 Wolfschlugen (DE)
(74) Vertreter: Gauss, Nikolai
(86) Internationale Anmeldenummer: PCT/EP2015/069945
(87) Internationale Veröffentlichungsnummer: WO 2016/045916

(56) Entgegenhaltungen:
- JP-U- S6 028 563
- US-A- 4 424 985
- US-A- 4 809 615

## Beschreibung

Die Erfindung betrifft ein Stützbein für eine einen Mast aufweisende Arbeitsmaschine gemäß Oberbegriff des Anspruchs 1 sowie eine ein solches Stützbein aufweisende Stützkonstruktion.

Stützbeine der eingangs genannten Art dienen dem Abstützen von mit einem Mast versehenen Arbeitsmaschinen. Sie werden, wenn der Mast nicht in Betrieb ist, platzsparend in einen Stützbeinkasten eingefahren, so dass sie nicht oder nur geringfügig herausstehen, wenn die Maschine an einen anderen Ort verlegt wird. Ist die Arbeitsmaschine, beispielsweise eine fahrbare Betonpumpe, in Betrieb, so muss das ausgefahrene Stützbein oftmals große Kräfte aufnehmen, die über den Stützbeinkasten übertragen und auf den Boden geleitet werden. Dabei wird die Kraft in der Regel an zwei Stellen vom Stützbeinkasten auf das Stützbein übertragen: das Stützbein liegt im Bereich der Öffnung des Stützbeinkastens oben an diesem an und ist an seinem hinteren Ende im Stützbeinkasten auf dessen Boden abgestützt. Bekannte Stützbeine weisen einen Hohlkörper auf, an dessen aus dem Stützbeinkasten ragendem Ende ein Stützfuß nach unten absteht. Der Hohlkörper ist aus vertikal ausgerichteten Stegblechen und horizontal ausgerichteten Gurtblechen zusammengesetzt, wobei die Gurtbleche oben und unten auf die Schmalseiten der Stegbleche aufgesetzt sind. Um ein Abknicken des Stützbeins an den Stellen, an denen die Kraft vom Stützbeinkasten eingeleitet wird, zu verhindern, muss das Stützbein an diesen Stellen besonders stabil ausgeführt sein. Dies wird regelmäßig dadurch erzielt, dass im Stützbein Querschotten eingeschweißt sind, was zur Folge hat, dass das Stützbein nur in solchen Stellungen zum Einsatz kommen kann, in denen die Krafteinleitung im Bereich der Querschotten erfolgt. Dies reduziert die Zahl der möglichen Stellungen des Stützbeins. Meist kann die Arbeitsmaschine nur mit ganz, halb oder gar nicht ausgefahrenem Stützbein betrieben werden. Ein Einbau einer Vielzahl von Querschotten in das Stützbein würde dessen Gewicht nachteilig erhöhen. US 4 424 985 A offenbart den Oberbegriff des Anspruchs 1. Es ist daher Aufgabe der Erfindung, ein Stützbein der eingangs genannten Art derart weiterzuentwickeln, dass eine mit ihm ausgestattete Arbeitsmaschine flexibler einsetzbar ist. Desweiteren soll eine Stützkonstruktion geschaffen werden, die ebenfalls eine flexiblere Einsetzbarkeit der mit ihr ausgestatteten Arbeitsmaschine ermöglicht.
Diese Aufgabe wird erfindungsgemäß durch ein Stützbein mit den Merkmalen des Anspruchs 1 und eine Stützkonstruktion mit den Merkmalen des Anspruchs 4 gelöst. Vorteilhafte Weiterbildungen der Erfindung sind Gegenstand der abhängigen Ansprüche.
Der Erfindung liegt der Gedanke zugrunde, den Kraftfluss über den Stützbeinkasten direkt über die freiliegenden Schmalseiten in die Stegbleche einzuleiten, die aufgrund ihrer vertikalen Ausrichtung große nach unten wirkende Kräfte aufnehmen können. Ein Kraftfluss über die horizontal ausgerichteten und daher durch eine vertikale Krafteinwirkung leichter verformbaren Gurtbleche oder über die die Gurtbleche mit den Stegblechen verbindenden Schweißnähte, wie bei vorbekannten Stützbeinen, wird dabei weitgehend vermieden. Das Stützbein kann daher in nahezu jeder beliebigen Position in Bezug auf den Stützbeinkasten eingesetzt werden, wodurch insbesondere auf engen Baustellen eine verbesserte Abstützung der Arbeitsmaschine möglich ist. Dabei ist es möglich, dass mindestens eines der Gurtbleche im Abstand von den Schmalseiten der Stegbleche mit deren Breitseiten verbunden ist, so dass es gar nicht mit dem Stützbeinkasten in Berührung kommt. Es ist jedoch auch möglich, dass eine außenliegende Breitseite mindestens eines der Gurtbleche mit einer Schmalseite jedes der Stegbleche fluchtet.

Erfindungsgemäß ist die Stützkonstruktion mit zwei sich im Abstand zueinander in einer Längsrichtung verlaufenden Stützleisten ausgestattet, wobei die Längsrichtung parallel zu den Breitseiten und den Schmalseiten der Stegbleche und der Gurtbleche verläuft. Auf den nach oben gerichteten Stützflächen der Stützleisten liegt jeweils eines der Stegbleche mit seiner nach unten weisenden Schmalseite auf. Die Stützleisten können entsprechend stabil ausgestaltet sein ohne dass der gesamte Boden des Stützbeinkastens entsprechend stabil und damit sehr schwer ausgeführt sein muss. Zudem weist der Stützbeinkasten vorteilhaft an seiner Vorderseite einen nach unten offenen, im Querschnitt U-förmigen Bügel auf, an dessen die freien Schenkel verbindender Basis eine Abstützfläche für die nach oben gerichteten Schmalseiten der Stegbleche angeordnet ist. Auch der U-förmige Bügel kann sehr stabil ausgeführt sein ohne das Gewicht des Stützbeinkastens über Gebühr zu erhöhen. Das Stützbein stützt sich dann zum einen in seinem dem Stützfuß abgewandten hinteren Bereich mit den nach unten gerichteten Schmalseiten der Stegbleche auf den Stützflächen der Stützleisten ab, während es sich im Bereich zwischen dem hinteren Ende und dem Stützfuß mit den nach oben gerichteten Schmalseiten seiner Stegbleche an der Abstützfläche des Bügels abstützt. Da der Hohlkörper des Stützbeins über seine gesamte Länge nahezu die gleiche Stabilität aufweist, kann er sich an nahezu jedem beliebigen Punkt der nach oben gerichteten Schmalseiten seiner Stegbleche an der Abstützfläche des Bügels abstützen.

Es wird bevorzugt, dass die Stützflächen und die nach unten weisenden Schmalseiten der Stegbleche jeweils über ihre gesamte Länge plan sind. Die Stützflächen sind vorteilhaft im Abstand über einem Boden des Stützbeinkastens angeordnet, so dass im Bereich zwischen den Stützleisten und dem Boden weitere Bauteile untergebracht werden können. Beispielsweise kann das Stützbein eine vom Hohlkörper nach unten abstehende Führungsleiste aufweisen, die zwischen dem Boden des Stützbeinkastens und den Stützleisten und/oder zwischen den Stützflächen geführt ist und die Führung des Stützbeins im Stützbeinkasten verbessert. Zudem kann zwischen dem Boden des Stützbeinkastens und den Stützflächen eine Wegmesseinrichtung zur Messung eines Verfahrwegs des Stützbeinkastens angeordnet sein. Diese weist vorteilhaft zwei stützbeinkastenfeste Zahnräder auf, über die eine Kette endlos umläuft, welche mit einem Mitnehmer mit dem Stützbein verbunden ist, wobei eines der Zahnräder mit einer Zähleinrichtung zum Zählen seiner Umdrehungen versehen ist. Auf diese Weise kann der Verfahrweg und damit die Position des Stützbeins in Bezug auf den Stützbeinkasten leicht gemessen werden. Die Wegmessung kann für ein Verfahren zur automatischen Steuerung des Masts der Arbeitsmaschine herangezogen werden, bei dem eine Steuereinrichtung die Stellung des Stützbeins bezüglich des Stützbeinkastens ermittelt und anhand des jeweils ermittelten Werts einen möglichen Schwenkbereich des Masts vorgibt, wobei dann ein Verschwenken des Masts außerhalb des vorgegebenen Schwenkbereichs blockiert wird.

Vorteilhaft ist bzw. sind mindestens eines der Stegbleche und vorzugsweise beide Stegbleche an der dem jeweils anderen Stegblech abgewandten äußeren Breitseite mit einer in der Längsrichtung verlaufenden Nut versehen, in die ein Verschleißelement eingesetzt ist, welches aus korrosionsbeständigem Material wie beispielsweise Edelstahl oder Kunststoff gefertigt sein kann. Vom Stützbeinkasten steht zudem mindestens ein Führungszapfen nach innen ab, um beim Verschieben des Stützbeins durch Anlage am bzw. Abgleiten auf dem jeweiligen Verschleißelement dessen Führung zu verbessern.

Zweckmäßig ist der Stützbeinkasten zu einer der Vorderseite gegenüberliegenden Rückseite offen, und im Stützbeinkasten ist der Hohlkörper eines weiteren Stützbeins aufgenommen und ragt zur Rückseite heraus. Dabei ist der Hohlkörper des weiteren Stützbeins ebenfalls in der Längsrichtung verschieblich gelagert und liegt mit den nach unten gerichteten Schmalseiten seiner Stegbleche auf den Stützflächen der Stützleisten auf. Insbesondere kann der Stützbeinkasten bezüglich einer senkrecht zur Längsrichtung verlaufenden Mittelebene spiegelsymmetrisch sein. Die Arbeitsmaschine ist mit einer solchen Stützkonstruktion dann zu beiden Seiten hin abstützbar, wobei nach beiden Seiten eine nahezu stufenlose Verfahrbarkeit der Stützbeine im Stützbeinkasten ermöglicht wird.
Das Ausfahren und Einziehen der Stützbeine erfolgt regelmäßig durch Antriebszylinder, deren Zylinderaugen jeweils mittels eines Bolzens am Stützbeinkasten befestigt sind. Bei zwei in entgegengesetzte Richtungen ausfahrbare Stützbeine aufweisenden Stützkonstruktionen werden zwei Antriebszylinder benötigt, die jeweils mit ihrem Zylinderauge mittels eines Bolzens am Stützbeinkasten befestigt sind. Indem jedes Zylinderauge mit einem eigenen Bolzen am Stützbeinkasten befestigt ist, muss der Stützbeinkasten entsprechend länger ausgestaltet werden. Hiergegen wird dadurch Abhilfe geschaffen, dass beide Arbeitszylinder an ihren Zylinderaugen mittels eines gemeinsamen Bolzens am Stützbeinkasten befestigt sind. Auf diese Weise kann eine Längeneinsparung von etwa 10 cm erzielt werden, so dass jedes der Stützbeine im Vergleich zu vorbekannten Stützkonstruktionen um etwa 5 cm länger ausgeführt werden kann.
Im Folgenden wird die Erfindung anhand eines in der Zeichnung schematisch dargestellten Ausführungsbeispiels näher erläutert. Es zeigen
- Fig. 1a, 1b: eine Stützkonstruktion mit zwei Stützbeinen, einem Stützbeinkasten und einem auf dem Stützbeinkasten aufgesetzten Lagerbock für einen Mast sowie eine teilweise aufgeschnittene Detaildarstellung;
- Fig. 2: eine Prinzipskizze, die die Abstützpunkte eines Stützbeins am Stützbeinkasten zeigt;
- Fig. 3: eine Querschnittsdarstellung der Stützkonstruktion gemäß Fig. 1a, 1b;
- Fig. 4: eine Darstellung des hinteren Endes eines im Stützbeinkasten aufgenommenen Stützbeins;

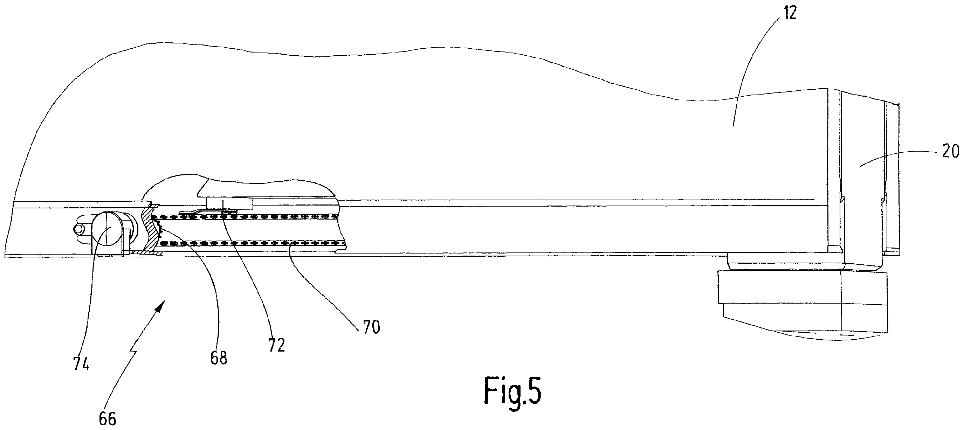

- Fig. 5: eine schematische Darstellung einer Wegmesseinrichtung einer Stützkonstruktion gemäß Fig. 1a, 1b und

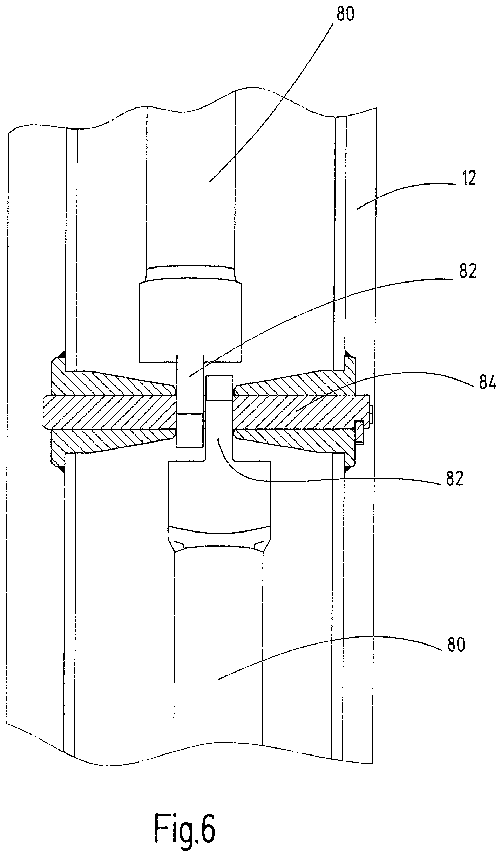

- Fig. 6: eine schematische Darstellung der Befestigung der Antriebszylinder zweier Stützbeine am Stützbeinkasten.

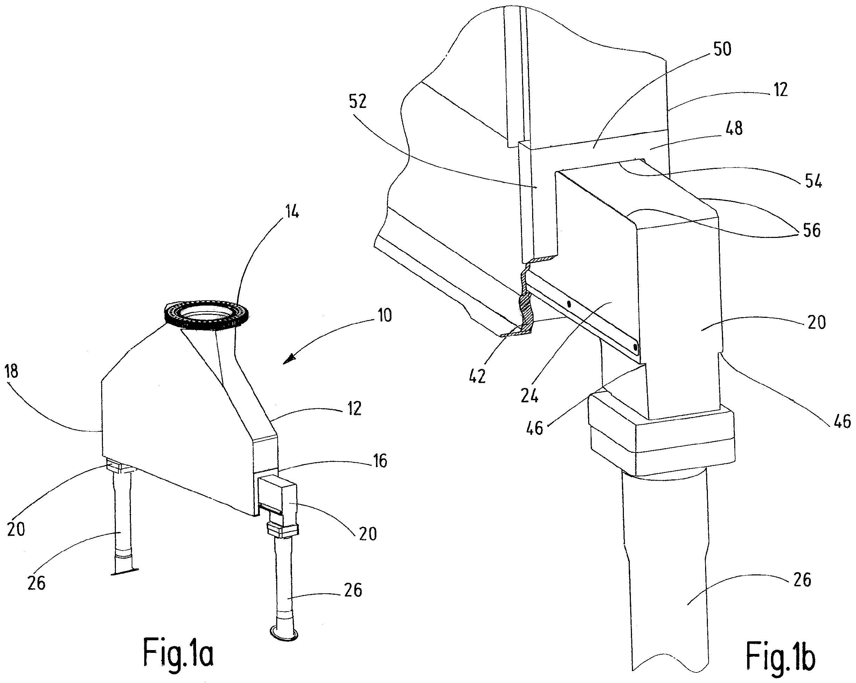

In Fig. 1a ist eine Stützkonstruktion 10 für eine einen Mast aufweisende Arbeitsmaschine dargestellt, die einen Stützbeinkasten 12 und einen auf dem Stützbeinkasten 12 montierten Lagerbock 14 für den Mast aufweist. Der Stützbeinkasten 12 ist zu einer Vorderseite 16 und zu einer Rückseite 18 hin offen, und in ihm sind zwei identisch ausgebildete Stützbeine 20 aufgenommen. Die Stützbeine 20 weisen jeweils einen sich in einer Längsrichtung 22 erstreckenden und in der Längsrichtung 22 im Stützbeinkasten 12 verschieblichen Hohlkörper 24 sowie einen an einem vorderen Ende des Hohlkörpers 24 montierten, nach unten abstehenden Stützfuß 26 auf. Jeder der Hohlkörper 24 ist aus zwei im Abstand zueinander parallel verlaufenden Stegblechen 28 und zwei im Abstand parallel zueinander verlaufenden, die Stegbleche 28 miteinander verbindenden Gurtblechen 30 zusammengesetzt. Jedes der Stegbleche 28 weist zwei einander abgewandte, vertikal angeordnete Breitseiten 32 und zwei die Breitseiten 32 miteinander verbindende, horizontal angeordnete Schmalseiten 34 auf. Die Gurtbleche 30 weisen jeweils zwei einander abgewandte, horizontal verlaufende Breitseiten 36 und zwei die Breitseiten 36 miteinander verbindende, vertikal angeordnete Schmalseiten 38 auf. Die Gurtbleche 30 sind dabei so zwischen den Stegblechen 28 angeordnet, dass ihre Schmalseiten 38 an den einander zugewandten Breitseiten 32 der beiden Stegbleche 28 anliegen, wobei beide Gurtbleche 30 im Abstand zu den Schmalseiten 34 der Stegbleche 28 angeordnet sind. Die Stegbleche 28 und die Gurtbleche 30 sind jeweils mit Schweißnähten 40 miteinander verbunden.

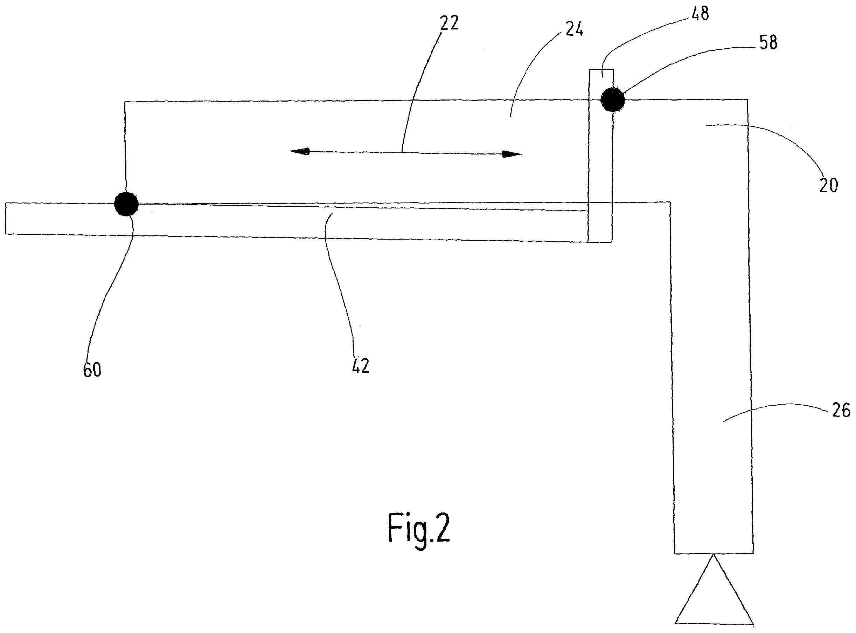

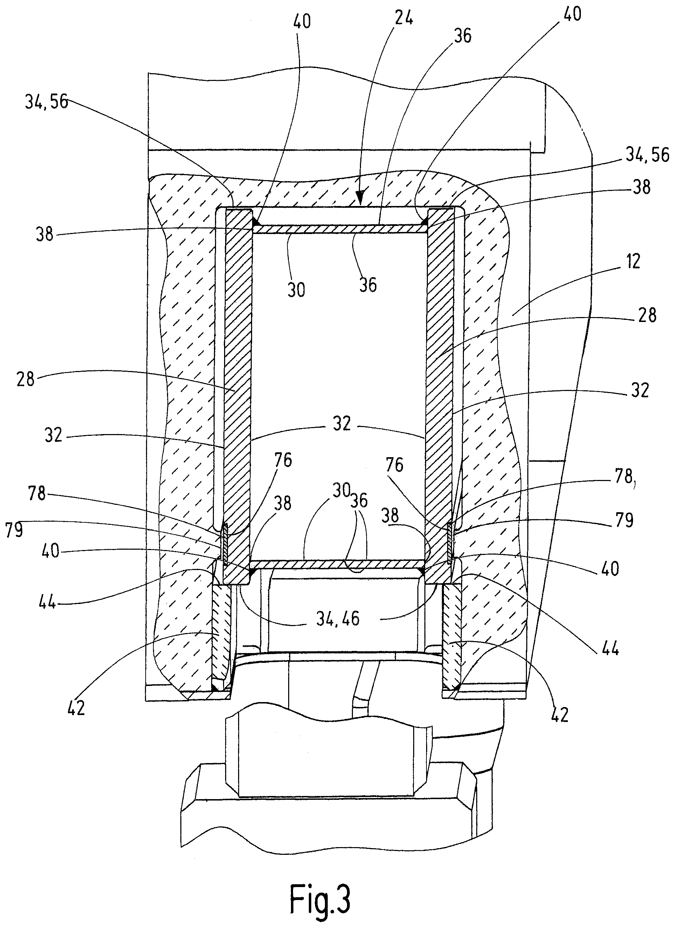

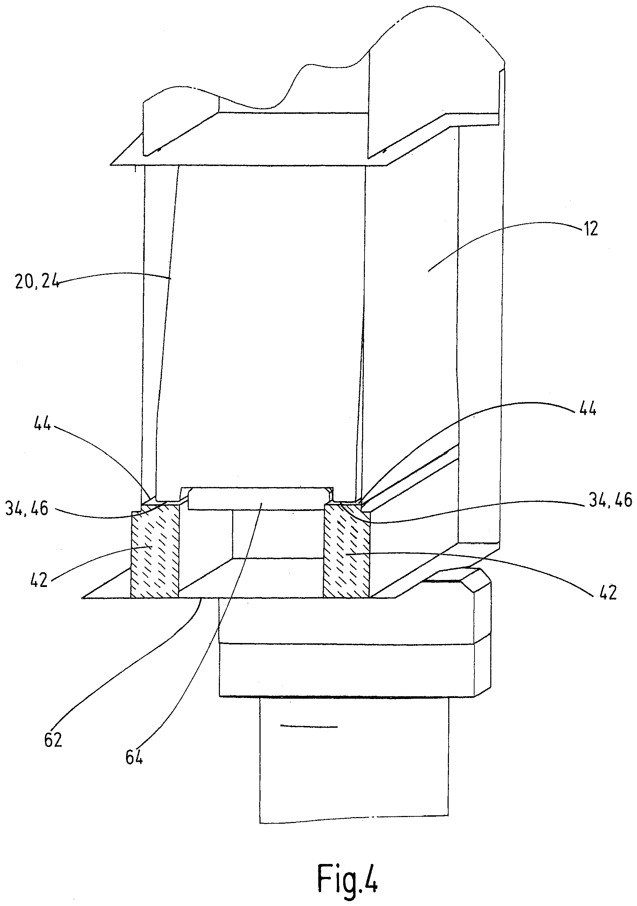

Der Stützbeinkasten 12 weist, wie in Fig. 3, 4 dargestellt, zwei im Abstand zueinander in der Längsrichtung 22 verlaufende Stützleisten 42 auf, die jeweils eine nach oben gerichtete, horizontale Stützfläche 44 aufweisen. Auf den Stützflächen 44 liegt jeweils eines der Stegbleche 28 mit einer durch seine untere horizontale Schmalseite 34 gebildete untere Auflagefläche 46 auf. Die Stützflächen 44 und die unteren Auflageflächen 46 sind dabei jeweils über ihre gesamte Länge plan ausgebildet. An der Vorderseite 16 und der Rückseite 18 weist der Stützbeinkasten 12 einen U-förmigen Bügel 48 auf, der nach unten offen ist und eine Basis 50 sowie von der Basis 50 nach unten abstehende freie Schenkel 52 aufweist. Die Unterseite der Basis 50 bildet eine Abstützfläche 54, an der sich die durch die oberen horizontalen Schmalseiten 34 der Stegbleche 28 gebildeten oberen Auflageflächen 56 der Stegbleche 28 abstützen. Wenn das betreffende Stützbein 20 Last aufnimmt, so stützt es sich, wie in Fig. 2 dargestellt, an vorderen und hinteren Abstützstellen 58, 60 am Stützbeinkasten 12 ab. Die vorderen Abstützstellen 58 befinden sich dabei an der Abstützfläche 54 des Bügels 48, während sich die hinteren Abstützstellen 60 an den Stellen der Stützflächen 44 befinden, auf denen das hintere Ende des Stützbeins 20 mit den unteren Auflageflächen 46 aufliegt.

Die Stützflächen 44 sind in einem Abstand zu einem Boden 62 des Stützbeinkastens 12 angeordnet, so dass zwischen den Stützbeinen 20 und dem Boden 62 weitere Bauteile untergebracht werden können. So ist am hinteren Ende jedes Stützbeins 20 eine vom unteren Gurtblech 30 nach unten abstehende, zwischen den Stützleisten 42 geführte Führungsleiste 64 angeordnet, die eine genauere Führung des jeweiligen Stützbeins 20 im Stützbeinkasten ermöglicht. Desweiteren ist zwischen dem jeweiligen Stützbein 20 und dem Boden 62 eine Wegmesseinrichtung 66 angeordnet, die zwei Zahnräder 68 und eine über die Zahnräder 68 gespannte, endlos umlaufende Kette 70 aufweist. Ein am jeweiligen Stützbein 20 befestigter Mitnehmer 72 bewegt die Kette 70 bei einem Verschieben des Stützbeins 20 in der Längsrichtung 22. Eine Zähleinrichtung 74 zählt die Umdrehungen eines der Zahnräder 68 und errechnet so den Verfahrweg des Stützbeins 20. Dabei kann eine Steuereinrichtung vorgesehen sein, die anhand der von der Wegmesseinrichtung 66 ermittelten Daten die Stellung des Stützbeins 20 bezüglich des Stützbeinkastens 12 ermittelt und aufgrund der ermittelten Werte einen möglichen Schwenkbereich des Masts vorgibt.

Die Stegbleche 28 sind an ihren einander abgewandten äußeren Breitseiten 32 zudem jeweils mit einer in der Längsrichtung 22 verlaufenden Nut 76 versehen, in die ein Verschleißelement 78 in Form einer bündig mit der Breitseite 32 abschließenden Leiste eingesetzt ist. An jeder der Leisten 78 gleitet beim Verschieben des Stützbeins 20 ein vom Stützbeinkasten 12 nach innen abstehender Führungszapfen 79, um die Längsführung des Stützbeins 20 weiter zu verbessern. Die Leisten 78, die einem erhöhten Verschleiß durch Abrieb ausgesetzt sind, sind nicht lackiert, sondern aus korrosionsbeständigem Material wie beispielsweise Edelstahl oder Kunststoff gefertigt.

Zum Aus- und Einfahren der Stützbeine 20 aus dem bzw. in den Stützbeinkasten 12 ist für jedes Stützbein 20 ein Antriebszylinder 80 im Stützbeinkasten 12 angeordnet. Jeder der Antriebszylinder ist an seinem Zylinderauge 82 mit dem Stützbeinkasten 12 verbunden. Hierfür ist ein gemeinsamer Bolzen 84 vorgesehen, der beide Zylinderaugen 82 mit dem Stützbeinkasten 12 verbindet.

Zusammenfassend ist folgendes festzuhalten: Die Erfindung betrifft ein Stützbein 20 für eine einen Mast aufweisende Arbeitsmaschine mit einem aus zwei im Abstand zueinander angeordneten Stegblechen 28 und zwei die Stegbleche 28 miteinander verbindenden, im Abstand zueinander angeordneten, mittels Schweißnähten 40 mit den Stegblechen 28 verbundenen Gurtblechen 30 zusammengesetzten Hohlkörper 24 und mit einem vom Hohlkörper 24 nach unten abstehenden Stützfuß 26, wobei die Stegbleche 28 jeweils zwei im Wesentlichen vertikal angeordnete Breitseiten 32 und zwei die Breitseiten 32 miteinander verbindende, im Wesentlichen horizontal angeordnete Schmalseiten 34 aufweisen und wobei die Gurtbleche 30 jeweils zwei im Wesentlichen horizontal angeordnete Breitseiten 36 und zwei die Breitseiten 36 miteinander verbindende, im Wesentlichen vertikal angeordnete Schmalseiten 38 aufweisen. Erfindungsgemäß ist vorgesehen, dass die Gurtbleche 30 jeweils mit ihren Schmalseiten 36 an einander zugewandten Breitseiten 32 der Stegbleche 28 anliegen und dass die Schmalseiten 34 der Stegbleche 28 freiliegen und untere und obere Auflageflächen 46, 56 des Hohlkörpers 24 bilden.

## Patentansprüche

1. Stützbein für eine einen Mast aufweisende Arbeitsmaschine mit einem aus zwei im Abstand zueinander angeordneten Stegblechen (28) und zwei die Stegbleche (28) miteinander verbindenden, im Abstand zueinander angeordneten, mittels Schweißnähten (40) mit den Stegblechen (28) verbundenen Gurtblechen (30) zusammengesetzten Hohlkörper (24) und mit einem vom Hohlkörper (24) nach unten abstehenden Stützfuß (26), wobei die Stegbleche (28) jeweils zwei im Wesentlichen vertikal angeordnete Breitseiten (32) und zwei die Breitseiten (32) miteinander verbindende, im Wesentlichen horizontal angeordnete Schmalseiten (34) aufweisen und wobei die Gurtbleche (30) jeweils zwei im Wesentlichen horizontal angeordnete Breitseiten (36) und zwei die Breitseiten (36) miteinander verbindende, im Wesentlichen vertikal angeordnete Schmalseiten (38) aufweisen, **dadurch gekennzeichnet, dass** die Gurtbleche (30) jeweils mit ihren Schmalseiten (36) an einander zugewandten Breitseiten (32) der Stegbleche (28) anliegen und dass die Schmalseiten (34) der Stegbleche (28) freiliegen und untere und obere Auflageflächen (46,56) des Hohlkörpers (24) bilden.

2. Stützbein nach Anspruch 1, **dadurch gekennzeichnet, dass** mindestens eines der Gurtbleche (30) im Abstand von den Schmalseiten (34) der Stegbleche (28) mit deren Breitseiten (32) verbunden ist.

3. Stützbein nach Anspruch 1 oder 2, **dadurch gekennzeichnet, dass** eine außenliegende Breitseite (36) zumindest eines der Gurtbleche (30) mit einer Schmalseite (34) jedes der Stegbleche (28) fluchtet.

4. Stützkonstruktion für eine einen Mast aufweisende Arbeitsmaschine mit einem Stützbein (20) nach einem der vorangehenden Ansprüche und mit einem den Hohlkörper (24) des Stützbeins (20) abschnittsweise aufnehmenden, zu einer Vorderseite (16) offenen Stützbeinkasten (12), wobei der Hohlkörper (24) im Stützbeinkasten (12) in einer parallel zu den Breitseiten (32, 36) und den Schmalseiten (34, 38) der Stegbleche (28) und der Gurtbleche (30) verlaufenden Längsrichtung (22) verschieblich gelagert ist und zur Vorderseite (16) herausragt, wobei der Stützfuß (26) außerhalb des Stützbeinkastens (12) angeordnet ist und wobei der Stützbeinkasten (12) zwei sich im Abstand zueinander in der Längsrichtung (22) erstreckende Stützleisten (42) aufweist, auf deren nach oben gerichteten Stützflächen (44) jeweils eines der Stegbleche (28) mit seiner nach unten weisenden Schmalseite (34) aufliegt.

5. Stützkonstruktion nach Anspruch 4, **dadurch gekennzeichnet, dass** der Stützbeinkasten (12) an seiner Vorderseite (16) einen nach unten offenen, im Querschnitt U-förmigen Bügel (48) aufweist, an dessen die freien Schenkel (52) verbindender Basis (50) eine Abstützfläche (54) für die nach oben gerichteten Schmalseiten (34) der Stegbleche (28) angeordnet ist.

6. Stützkonstruktion nach Anspruch 4 oder 5, **dadurch gekennzeichnet, dass** die Stützflächen (44) und die nach unten weisenden Schmalseiten (34) der Stegbleche (28) jeweils über ihre gesamte Länge plan sind.

7. Stützkonstruktion nach einem der Ansprüche 4 bis 6, **dadurch gekennzeichnet, dass** die Stützflächen (44) im Abstand über einem Boden (62) des Stützbeinkastens (12) angeordnet sind.

8. Stützkonstruktion nach Anspruch 7, **dadurch gekennzeichnet, dass** das Stützbein (20) eine vom Hohlkörper (24) nach unten abstehende Führungsleiste (64) aufweist, die zwischen dem Boden (62) des Stützbeinkastens (12) und den Stützflächen (44) und/oder zwischen den Stützleisten (42) geführt ist.

9. Stützkonstruktion nach Anspruch 7 oder 8, **dadurch gekennzeichnet, dass** zwischen dem Boden (62) des Stützbeinkastens (12) und den Stützflächen (44) eine Wegmesseinrichtung (66) zur Messung eines Verfahrwegs des Stützbeins (20) angeordnet ist.

10. Stützkonstruktion nach Anspruch 9, **dadurch gekennzeichnet, dass** die Wegmesseinrichtung (66) zwei stützbeinkastenfeste Zahnräder (68) aufweist, über die eine Kette (70) endlos umläuft, welche über einen Mitnehmer (72) mit dem Stützbein (20) verbunden ist, wobei eines der Zahnräder (68) mit einer Zähleinrichtung (74) zum Zählen seiner Umdrehungen versehen ist.

11. Stützkonstruktion nach einem der Ansprüche 4 bis 10, **dadurch gekennzeichnet, dass** mindestens eines der Stegbleche (28) und vorzugsweise beide Stegbleche (28) an der dem jeweils anderen Stegblech (28) abgewandten äußeren Breitseite (32) mit einer in der Längsrichtung (22) verlaufenden Nut (76) versehen ist bzw. sind, in die ein Verschleißelement (78) eingesetzt ist, und dass vom Stützbeinkasten (12) mindestens ein Führungszapfen (79) zur Anlage am jeweiligen Verschleißelement (78) nach innen absteht.

12. Stützkonstruktion nach einem der Ansprüche 4 bis 11, **dadurch gekennzeichnet, dass** der Stützbeinkasten (12) zu einer der Vorderseite (16) gegenüberliegenden Rückseite (18) offen ist und dass im Stützbeinkasten (12) der Hohlkörper (24) eines weiteren Stützbeins (20) nach einem der Ansprüche 1 bis 3 aufgenommen ist und zur Rückseite (18) herausragt, wobei der Hohlkörper (24) des weiteren Stützbeins (20) in der Längsrichtung (22) verschieblich gelagert ist und mit den nach unten gerichteten Schmalseiten (34) seiner Stegbleche (28) auf den Stützflächen (44) aufliegt.

13. Stützkonstruktion nach Anspruch 12, **dadurch gekennzeichnet, dass** jedes der Stützbeine (20) mittels eines im Stützbeinkasten (12) angeordneten Antriebszylinders (80) verschiebbar ist, wobei beide Antriebszylinder (80) an ihren Zylinderaugen (82) mittels eines gemeinsamen Bolzens (84) am Stützbeinkasten (12) befestigt sind.

14. Verfahren zur Steuerung eines Masts einer mit einer Stützkonstruktion nach einem der Ansprüche 4 bis 13 versehenen Arbeitsmaschine, wobei eine Steuereinrichtung die Stellung des Stützbeins (20) bzw. der Stützbeine (20) bezüglich des Stützbeinkastens (12) ermittelt und anhand der ermittelten Werte einen möglichen Schwenkbereich des Masts vorgibt.

## Claims

1. A supporting leg for a working machine having a mast, with a hollow body (24) which is composed of two web plates (28), which are arranged at a distance from each other, and two flange plates (30), which connect the web plates (28) to each other, which are arranged at a distance from each other, and which are connected to the web plates (28) by means of weld seams (40), and with a supporting foot (26) protruding downward from the hollow body (24), wherein the web plates (28) in each case have two substantially vertically arranged wide sides (32) and two substantially horizontally arranged narrow sides (34) connecting the wide sides (32) to each other, and wherein the flange plates (30) in each case have two substantially horizontally arranged wide sides (36) and two substantially vertically arranged narrow sides (38) connecting the wide sides (36) to each other, **characterized in that** the flange plates (30) each bear with their narrow sides (36) against mutually facing wide sides (32) of the web plates (28), and **in that** the narrow sides (34) of the web plates (28) are exposed and form lower and upper bearing surfaces (46, 56) of the hollow body (24).

2. The supporting leg as claimed in claim 1, **characterized in that** at least one of the flange plates (30) is connected at a distance from the narrow sides (34) of the web plates (28) to the wide sides (32) thereof.

3. The supporting leg as claimed in claim 1 or 2, **characterized in that** an outer wide side (36) of at least one of the flange plates (30) is aligned with a narrow side (34) of each of the web plates (28).

4. A supporting construction for a working machine having a mast, with a supporting leg (20) as claimed in one of the preceding claims, and with a supporting leg box (12) which partially accommodates the hollow body (24) of the supporting leg (20) and is open to a front side (16), wherein the hollow body (24) is mounted in the supporting leg box (12) so as to be displaceable in a longitudinal direction (22) running parallel to the wide sides (32, 36) and to the narrow sides (34, 38) of the web plates (28) and the flange plates (30), and projects to the front side (16), wherein the supporting foot (26) is arranged outside the supporting leg box (12), and wherein the supporting leg box (12) has two supporting strips (42) which extend at a distance from each other in the longitudinal direction (22) and on the upwardly directed supporting surfaces (44) of which one of the web plates (28) in each case rests by its downwardly pointing narrow side (34).

5. The supporting construction as claimed in claim 4, **characterized in that** the front side (16) of the supporting leg box (12) has a downwardly open, cross-sectionally U-shaped bracket (48), on the base (50) of which, which connects the free limbs (52), a supporting surface (54) for the upwardly directed narrow sides (34) of the web plates (28) is arranged.

6. The supporting construction as claimed in claim 4 or 5, **characterized in that** the supporting surfaces (44) and the downwardly pointing narrow sides (34) of the web plates (28) are in each case flat over the entire length thereof.

7. The supporting construction as claimed in one of claims 4 to 6, **characterized in that** the supporting surfaces (44) are arranged at a distance above a bottom (62) of the supporting leg box (12).

8. The supporting construction as claimed in claim 7, **characterized in that** the supporting leg (20) has a guide strip (64) which protrudes downward from the hollow body (24) and is guided between the bottom (62) of the supporting leg box (12) and the supporting surfaces (44) and/or between the supporting strips (42).

9. The supporting construction as claimed in claim 7 or 8, **characterized in that** a position-measuring device (66) for measuring a travel of the supporting leg (20) is arranged between the bottom (62) of the supporting leg box (12) and the supporting surfaces (44).

10. The supporting construction as claimed in claim 9, **characterized in that** the position-measuring device (66) has two toothed wheels (68) which are mounted on the supporting leg box and over which a chain (70) endlessly revolves, said chain being connected via a driver (72) to the supporting leg (20), wherein one of the toothed wheels (68) is provided with a counting device (74) for counting the revolutions thereof.

11. The supporting construction as claimed in one of claims 4 to 10, **characterized in that** at least one of the web plates (28) and preferably both web plates (28) are or is provided on the outer wide side (32), which faces away from the other web plate (28) in each case, with a groove (76) which runs in the longitudinal direction (22) and into which a wear element (78) is inserted, and **in that** at least one guide pin (79) for bearing against the respective wear element (78) protrudes inward from the supporting leg box (12).

12. The supporting construction as claimed in one of claims 4 to 11, **characterized in that** the supporting leg box (12) is open to a rear side (18) opposite the front side (16), and **in that** the hollow body (24) of a further supporting leg (20) as claimed in one of claims 1 to 3 is accommodated in the supporting leg box (12) and protrudes to the rear side (18), wherein the hollow body (24) of the further supporting leg (20) is mounted displacably in the longitudinal direction (22) and rests with the downwardly directed narrow sides (34) of its web plates (28) on the supporting surfaces (44).

13. The supporting construction as claimed in claim 12, **characterized in that** each of the supporting legs (20) is displaceable by means of a drive cylinder (80) arranged in the supporting leg box (12), wherein the two drive cylinders (80) are fastened at their cylinder eyes (82) to the supporting leg box (12) by means of a common bolt (84).

14. A method for controlling a mast of a working machine provided with a supporting construction as claimed in one of claims 4 to 13, wherein a control device determines the position of the supporting leg (20) or of the supporting legs (20) with respect to the supporting leg box (12) and, with reference to the determined values, specifies a possible pivoting range of the mast.

## Revendications

1. Béquille pour une machine de travail présentant un mât, comprenant un corps creux (24) constitué de deux tôles d'âme (28) disposées à distance l'une de l'autre et de deux tôles de ceinture (30) connectées aux tôles d'âme (28) par des cordons de soudure (40), disposées à distance l'une de l'autre et reliant l'une à l'autre les tôles de d'âme (28) et comprenant un pied de support (26) saillant vers le bas depuis le corps creux (24), les tôles d'âme (28) présentant à chaque fois deux côtés larges (32) disposés essentiellement verticalement et deux côtés étroits (34) disposés essentiellement horizontalement, reliant l'un à l'autre les côtés larges (32), et les tôles de ceinture (30) présentant à chaque fois deux côtés larges (36) disposés essentiellement horizontalement et deux côtés courts (38) disposés essentiellement verticalement, reliant l'un à l'autre les côtés larges (36), **caractérisée en ce que** les tôles de ceinture (30) s'appliquent à chaque fois avec leurs côtés courts (36) contre des côtés larges (32) des tôles d'âme (28) tournés l'un vers l'autre et **en ce que** les côtés courts (34) des tôles d'âme (28) sont exposés et forment des surfaces d'appui inférieure et supérieure (46, 56) du corps creux (24).

2. Béquille selon la revendication 1, **caractérisée en ce qu'**au moins l'une des tôles de ceinture (30) est connectée à distance des côtés courts (34) des tôles d'âme (28) à leurs côtés larges (32).

3. Béquille selon la revendication 1 ou 2, **caractérisée en ce qu'**un côté large situé à l'extérieur (36) d'au moins l'une des tôles de ceinture (30) est aligné avec un côté court (34) de chacune des tôles d'âme (28) .

4. Construction de support pour une machine de travail présentant un mât, comprenant une béquille (20) selon l'une quelconque des revendications précédentes et un caisson de béquille (12) recevant en partie le corps creux (24) de la béquille (20), ouvert vers un côté avant (16), le corps creux (24) étant supporté de manière déplaçable dans le caisson de béquille (12) dans une direction longitudinale (22) s'étendant parallèlement aux côtés larges (32, 36) et aux côtés courts (34, 38) des tôles d'âme (28) et des tôles de ceinture (30), et faisant saillie vers le côté avant (16), le pied de support (26) étant disposé à l'extérieur du caisson de béquille (12) et le caisson de béquille (12) présentant deux baguettes de support (42) s'étendant à distance l'une de l'autre dans la direction longitudinale (22), sur les surfaces de support orientées vers le haut (44) desquelles repose à chaque fois l'une des tôles d'âme (28) avec son côté court (34) tourné vers le bas.

5. Construction de support selon la revendication 4, **caractérisée en ce que** le caisson de béquille (12) présente, au niveau de son côté avant (16), un étrier (48) de section transversale en forme de U, ouvert vers le bas, au niveau de la base (50) reliant les branches libres (52) duquel est disposée une surface d'appui (54) pour les côtés courts (34) orientés vers le haut des tôles d'âme (28).

6. Construction de support selon la revendication 4 ou 5, **caractérisée en ce que** les surfaces de support (44) et les côtés courts (34) orientés vers le bas des tôles d'âme (28) sont à chaque fois plans sur toute leur longueur.

7. Construction de support selon l'une quelconque des revendications 4 à 6, **caractérisée en ce que** les surfaces de support (44) sont disposées à distance au-dessus d'un fond (62) du caisson de béquille (12) .

8. Construction de support selon la revendication 7, **caractérisée en ce que** la béquille (20) présente une baguette de guidage (64) faisant saillie vers le bas depuis le corps creux (24), qui est guidée entre le fond (62) du caisson de béquille (12) et les surfaces de support (44) et/ou entre les baguettes de support (42).

9. Construction de support selon la revendication 7 ou 8, **caractérisée en ce qu'**entre le fond (62) du caisson de béquille (12) et les surfaces de support (44) est disposé un dispositif de mesure de course (66) pour mesurer une course de déplacement de la béquille (20).

10. Construction de support selon la revendication 9, **caractérisée en ce que** le dispositif de mesure de course (66) présente deux roues dentées (68) fixées au caisson de béquille, par le biais desquelles une chaîne (70) est entraînée sans fin, laquelle est connectée par le biais d'un dispositif d'entraînement (72) à la béquille (20), l'une des roues dentées (68) étant pourvue d'un dispositif de comptage (74) pour compter ses rotations.

11. Construction de support selon l'une quelconque des revendications 4 à 10, **caractérisée en ce qu'**au moins l'une des tôles d'âme (28) et de préférence les deux tôles d'âme (28) est/sont pourvues, au niveau du côté large extérieur (32) opposé à l'autre tôle d'âme respective (28), d'une rainure (76) s'étendant dans la direction longitudinale (22), dans laquelle est inséré un élément d'usure (78) et **en ce qu'**au moins un tourillon de guidage (79) fait saillie vers l'intérieur depuis le caisson de béquille (12) en vue de s'appuyer contre l'élément d'usure respectif (78).

12. Construction de support selon l'une quelconque des revendications 4 à 11, **caractérisée en ce que** le caisson de béquille (12) est ouvert vers un côté arrière (18) opposé au côté avant (16), et **en ce qu'**une béquille supplémentaire (20) selon l'une quelconque des revendications 1 à 3 est reçue dans le caisson de béquille (12) du corps creux (24) et fait saillie vers le côté arrière (18), le corps creux (24) de la béquille supplémentaire (20) étant supporté de manière déplaçable dans la direction longitudinale (22) et reposant avec les côtés courts orientés vers le bas (34) de ses tôles d'âme (28) sur les surfaces de support (44).

13. Construction de support selon la revendication 12, **caractérisée en ce que** chacune des béquilles (20) peut être déplacée au moyen d'un cylindre d'entraînement (80) disposé dans le caisson de béquille (12), les deux cylindres d'entraînement (80) étant fixés au niveau de leurs oeillets de cylindre (82) au moyen d'un boulon commun (84) au niveau du caisson de béquille (12).

14. Procédé de commande d'un mât d'une machine de travail pourvue d'une construction de support selon l'une quelconque des revendications 4 à 13, un dispositif de commande déterminant la position de la béquille (20) ou des béquilles (20) par rapport au caisson de béquille (12) et prédéfinissant, à l'aide des valeurs déterminées, une plage de pivotement possible du mât.
